# NEW EUROPEAN PATENT SPECIFICATION

(11) **EP 0 834 449 B2**
(45) Date of publication and mention of the opposition decision: **06.05.2009**
(45) Mention of the grant of the patent: 17.12.2003
(21) Application number: 97307817.3
(22) Date of filing: 03.10.1997
(51) Int. Cl.: B62L 5/10

(54) **Bicycle brake**
Fahrradbremse
Frein de bicyclette

(30) Priority: 04.10.1996 JP 26424996
(43) Date of publication of application: 08.04.1998
(73) Proprietor: SHIMANO INC., Osaka 590-8577 (JP)
(72) Inventor: Matsueda, Keiji, Shimonoseki-shi, Yamaguchi (JP)
(74) Representative: Murnane, Graham John

(56) References cited:
- EP-A- 0 064 839
- EP-A- 0 562 288
- CH-A- 205 398
- CH-A- 256 178
- DE-A1- 2 949 024
- FR-A- 635 527
- GB-A- 412 355
- NL-C- 66 182
- US-A- 4 323 146

## Description

### BACKGROUND OF THE INVENTION

The present invention is directed to bicycle brakes and, especially, but not exclusively, to a bicycle hub brake that has a narrower width than conventional hub brakes.

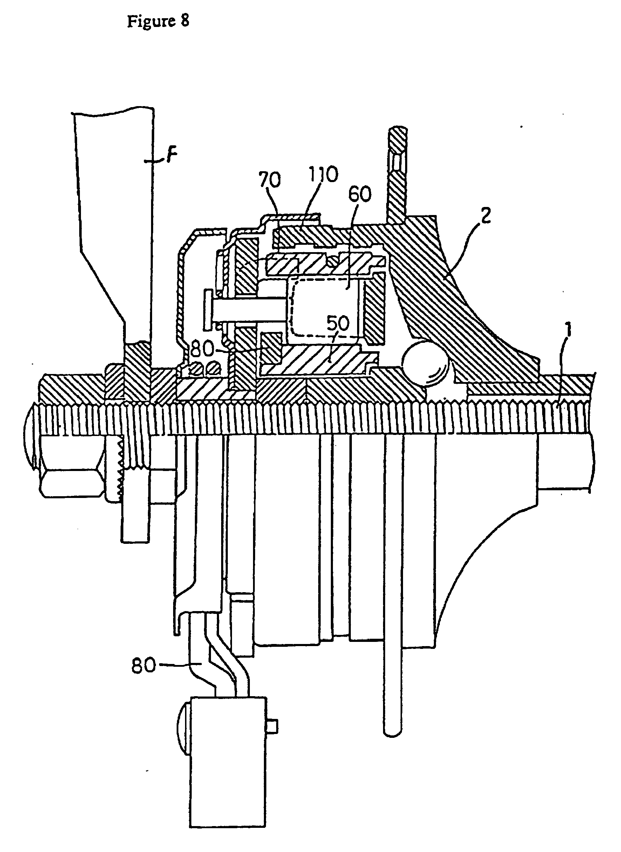

The basic structure of a conventional bicycle hub brake, which is generally referred to as a roller brake, is shown in Figure 8. As shown in Figure 8, the hub axle 1 of the front or rear wheel of the bicycle is fixed to the frame F, and a cam 50 is swingably located about the hub axle 1. A plurality of inclined cam surfaces are provided on the outer peripheral surface of the cam member 50. A brake operating element in the form of a roller 60 (for example) is in contact with each cam surface, and a brake shoe 70 is provided radially outwardly of the roller 60. A rotatable operating arm 80 swings about the hub axle 1 and rotates the cam 50 so that the rollers 60 are pushed radially outwardly by the cam surfaces. As a result, the brake shoe 70 is displaced radially outwardly and comes in contact with a brake ring 110 that is fixed to the hub drum 2 and that integrally rotates with the hub drum 2, thereby applying braking force. As can be understood by an examination of the structure depicted in Figure 8, the roller brake mechanism as a whole in conventional roller brakes must be attached axially in tandem to the side of the hub drum 2, resulting in the drawback of a wide brake/hub assembly. Such a coventional bicycle hub brake is know from EP-A-562 288.

### SUMMARY OF THE INVENTION

The present invention is directed to a bicycle brake according to claim 1. Preferable and/or optional features are set out in the dependent claims. A preferred embodiment provides a brake that has a narrower width than conventional hub brakes. This is accomplished by radially enlarging the cam member so that the cam member defines a cam member space radially inwardly thereof, and then allowing components of the hub brake assembly to project into the cam member space.

According to the invention, a bicycle brake includes a fixed member (e.g., a hub axle) having a fixed member axis, a hub drum rotatably supported around the fixed member, and a fixed case non rotatably fixed relative to the fixed member. The braking mechanism includes a brake member, a brake operating element disposed radially inwardly of the brake member for pushing the brake member radially outwardly, and a cam member disposed radially inwardly of the brake operating element and coupled to the fixed case. The cam member is shaped so that the brake operating element moves radially outwardly in response to relative rotation between the cam member and the brake operating element, and the cam member defines a cam member space radially inwardly thereof. A rotating case is coupled to the hub drum for rotating integrally with the hub drum. The rotating case has a contact surface disposed radially outwardly of the brake member for contacting the brake member when the brake member moves radially outwardly. To reduce the axial length of the bicycle brake, a portion of the hub drum is disposed within the cam member space. Alternatively, an attachment mechanism may be used for coupling the rotating case to the hub drum, wherein a portion of the attachment mechanism is disposed within the cam member space.

The cam member is rotatably coupled to the fixed case, and a cam operating member is provided for rotating the cam member. The cam operating member includes a first link arm coupled for rotation around a rotational axis radially offset from the axle axis. A second link arm extends from the first link arm and is inclined relative to the first link arm for engaging a detent on the cam member so that rotation of the cam operating member around the rotational axis causes rotation of the cam.

According to the invention, there is a plurality of the brake members encircling the fixed member, the cam member encircles the fixed member, there is a plurality of the brake operating elements circumferentially disposed along an outer peripheral surface of the cam member, the outer peripheral surface of the cam member includes a plurality of cam surfaces, and each cam surface is disposed in close proximity to one of the plurality of brake operating elements so that the plurality of cam surfaces press the plurality of brake operating elements outwardly when the cam member and the plurality of brake operating elements rotate relative to each other. A brake operating element case may be fixed relative to the fixed case, and a plurality of the brake operating element biasing elements are provided for biasing the plurality of brake operating elements toward their associated cam surfaces so that the plurality of brake operating elements are biased radially outwardly. This provides a rapid response when the cam member is rotated.

### BRIEF DESCRIPTION OF THE DRAWINGS

Figure 1 is a side view of a particular embodiment of a bicycle brake;
Figure 2 is a side view of the internal structure of the bicycle brake shown in Figure 1;
Figure 3 is a cross sectional view of the bicycle brake shown in Figure 1;
Figure 4 is a plan view of a fixed case used in the bicycle brake shown in Figure 1;
Figure 5 is a plan view of a roller case used in the bicycle brake shown in Figure 1;
Figure 6 is a side view of the brake shoes used in the bicycle brake shown in Figure 1;
Figures 7A and 7B are detailed side cross sectional views illustrating the connections between the roller case and the fixed case used in the bicycle brake shown in Figure 1; and
Figure 8 is a cross sectional view of a prior art bicycle brake.

### DETAILED DESCRIPTION OF THE DRAWINGS

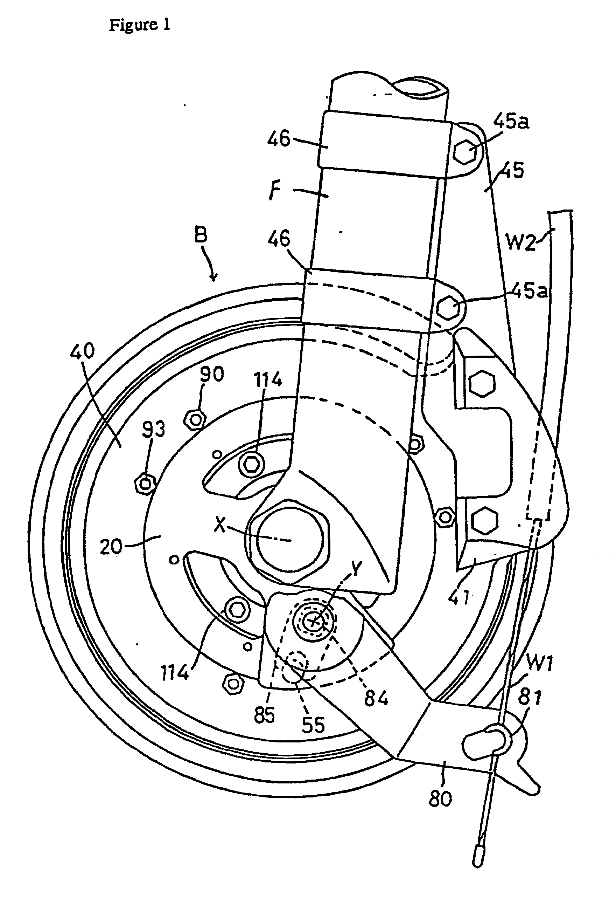

Figure 1 is a side view of a particular embodiment of a bicycle brake B according to the present invention. Bicycle brake B is attached to a bicycle frame fork F such that the left side of Figure 1 is the forward direction of the bicycle, and the right side of Figure 1 is the backward direction of the bicycle. The brake device B is generally referred to as a roller brake. In the present embodiment, the brake device B is attached to the front wheel hub, but it may also be attached to the rear wheel hub. The brake device B is operated by a brake operating cable W1, one end of which is connected to a brake lever mounted on the handlebar. The outer casing W2 of the cable W1 extends into a support arm 45 described below, and the other end of the cable W1 is engaged by the free end of an operating arm 80 serving as a first link arm.

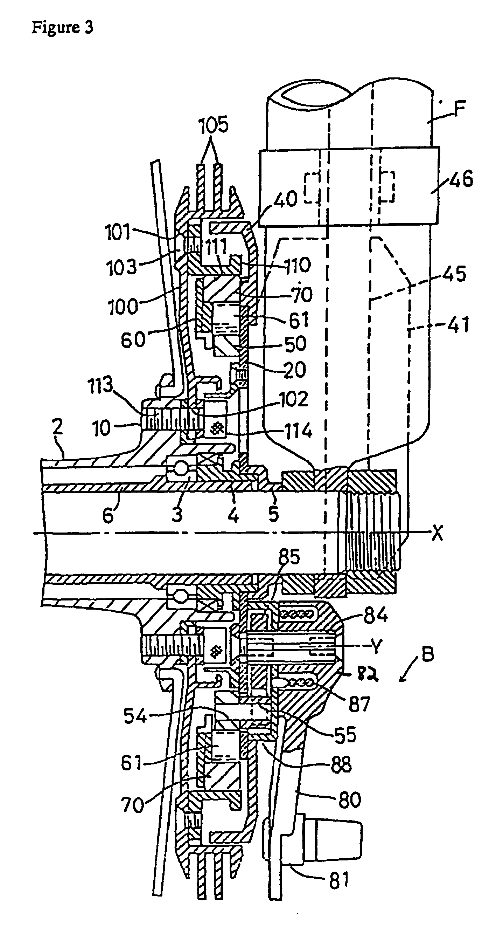

As shown in Figure 3, a sleeve 6 is fixed to the outer periphery of a fixed member in the form of a hub axle, and bearings 3 are provided near either end in the axial direction on the sleeve 6 to rotatably support a hub drum 2. A first lock seat 4 is located near the right end of the sleeve 6, and a second lock seat 5 is located to the right of the first lock seat 4 and contacts the first lock seat 4. A fixed case comprising a first fixed side case 20 and a second fixed side case 40 is mounted between first lock seat 4 and second lock seat 5 and is fixed relative to hub axle 1. More specifically, the inner peripheral surface defined by a central detent hole 21 in the first fixed side case 20 is axially positioned on the first lock seat 4 so that it is held between a radially extending rim of the first lock seat 4 and the left end of the second lock seat 5.

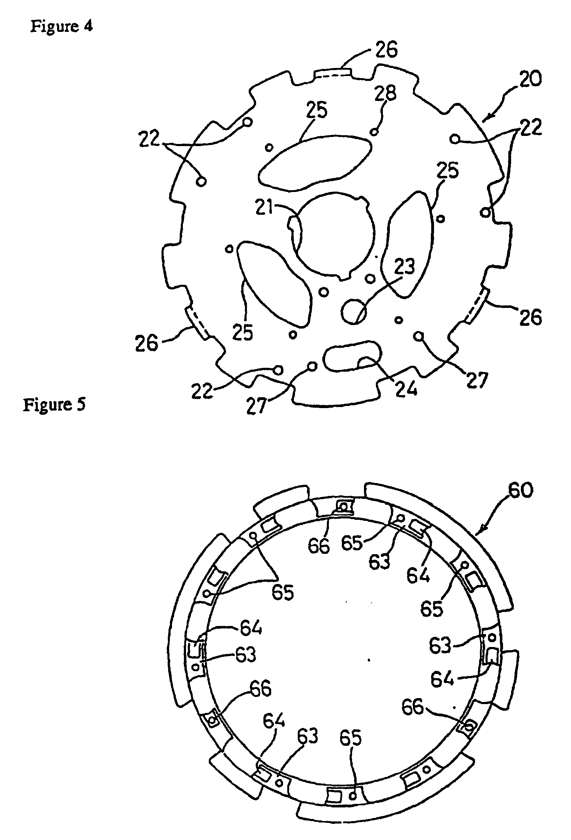

As shown in Figure 4, the first fixed side case 20 as a whole is in the form of a disk, in the center of which is formed the detent hole 21 that engages the first lock seat 4 on the hub axle 1. Three spaces 25 are formed in such a way that three arms extend from this detent hole 21. Six detent holes 28 are circumferentially disposed near the outside borders of the spaces 25. A detent hole 23 through which passes the swinging shaft of the operating arm 80 is provided in one of the three arms, and a long hole 24 is disposed radially outwardly from the detent hole 23. A protrusion 55 located on cam member 50 passes through long hole 24 in order to engage with a second link arm 85 attached to operating arm 80. The long hole extends peripherally in the form of an arc and has an angle range of about 30 degrees relative to the hub axle 1 for allowing arcuate movement of protrusion 55. Four detent holes 27 which are used to fix a case 88 for housing the second link arm 85 are provided in the region where the detent hole 23 is provided. Detent holes 22 for fixing the second fixed side case 40 to the first fixed side case 20 are provided on the outer peripheral portion of the first fixed side case 20. Three axially extending protrusions 26 are provided in three peripheral locations at equivalent angles. These are formed by bending the peripheral component of the first fixed side case 20 at 90 degrees, and they are used to position the brake shoe 70 described below.

As shown in Figure 1, a holding component 41 is attached to the second fixed side case 40, and a support arm 45 is attached to holding component 41. The support arm 45 extends generally perpendicular from the holding component 41 and generally parallel with the bicycle frame F. Support arm 45 is attached to attaching bands 46 through screws 45a for fixing first fixed side plate 20 and second fixed side plate 40 to the bicycle frame so that first fixed side plate 20 and second fixed side plate 40 are prevented from rotating about the hub axle 1.

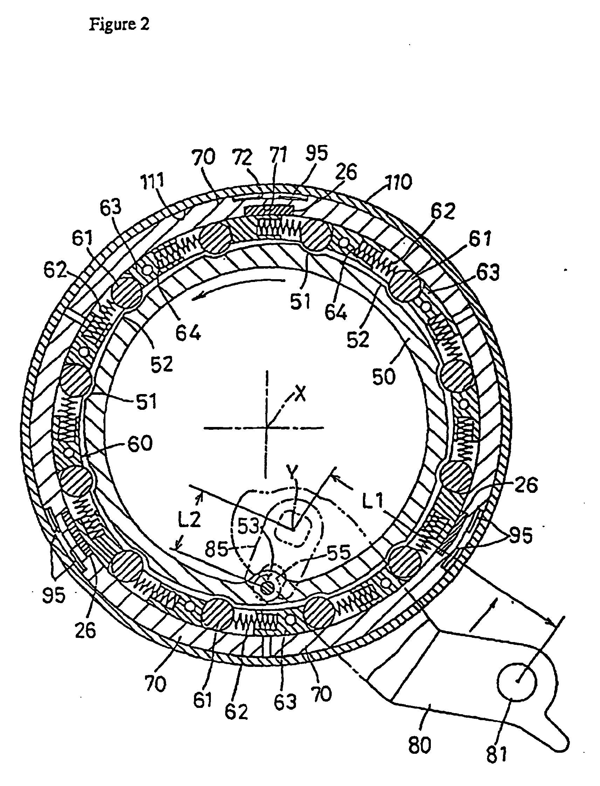

As shown in Figures 2 and 3, cam member 50 is rotatably mounted relative to the first fixed side case. The outer peripheral surface of cam member 50 has a plurality of base components 51 and a plurality of cam surfaces 52. The plurality of base components 51 define the base position corresponding to the non-operating position of rollers 61, and the plurality of cam surfaces 52 define the operating positions of rollers 61. In Figure 2, each component 51 defining the base position is furnished with a wall to prevent its associated roller 61 from moving counter-clockwise in the peripheral direction of cam 50. The cam surfaces 52 extend radially outwardly in the clockwise direction. The cam member 50 has a detent 53 for supporting the protrusion 55 that engages with the second link arm 85, and a detent hole 54 in which the protrusion 55 is located.

The inner peripheral diameter of the cam member 50 is about 83 mm. The cam member 50 is thus made with a large diameter so that a cam member space can be formed radially inwardly of the cam member 50, thus making it possible to house part of the hub drum 2 or part of the attachment mechanism that fixes the rotating side case 100 to the hub drum 2. This, in turn, makes it possible to reduce the axial width of the hub drum 2 and brake device assembly. As an additional benefit, a hub drum 2 having a substantial wall thickness with little possibility of breaking can be used when the cam member 50 has this diameter. The inner peripheral diameter of the cam member 50 should be at least 70 mm.

The operating mechanism for operating the cam member 50 is described below. One end of the brake operating cable W1 is attached to a connecting component 81 fitted on the operating arm 80 which, in turn, extends from a base 82. The base 82 has an engagement groove that mates with a square-shaped portion of a swinging shaft 84. Base 82 also has a space that accommodates a spring 87 that biases operating arm 80 in the counter-clockwise direction in Figure 1.

One end of the swinging shaft 84 passes through the detent hole 23 of the first fixed side case 20 and is fastened with a fastener. The outer peripheral surface of the swinging shaft 84 is cylindrical at the location where it passes through a case 88 housing the second link arm 85 and at the location where it passes through the detent hole 23. This ensures smooth relative rotation. The swinging shaft 84 thus swings about a swing axis Y located radially outwardly from the axis X of the hub axle 1. The length L1 of the operating arm 80 from the point where the brake operating cable W1 is engaged to the axis Y is about 4 times greater than the length L2 of the second link arm 85 from the axis Y to the point where it is engaged with the protrusion 55. The operating force needed to operate the brake can be reduced because of the lower L2/L1 ratio.

As shown in Figure 3, the base 82 of the operating arm 80 is in contact with the outer face of the case 88. One end of the spring 87 is engaged with the operating arm 80, and the other end is engaged with the case 88. In this embodiment, base 82 has a plurality of grooves that engage with the end of the spring 87, thus allowing the biasing force of the spring 87 to be adjusted. The second link arm 85 is engaged with a square shaped component of the shaft 84 so that second link arm 85 swings integrally with the operating arm 80. The free end of the second link arm 85 has a bifurcation, between which the protrusion 55 attached to the detent hole 54 of the cam member 50 is held and engaged, thus allowing second link arm 85 to swing cam member 50 in two directions.

A roller case 60 having the structure shown in Figure 5 is disposed radially outwardly from the cam member 50 as shown in Figure 2. The entire roller case 60 is ring-shaped, with twelve axially protruding spring cases 63 uniformly distributed at equal angles along the circumference thereof. Cylindrical rollers 61 are housed one at a time in the intervals between these spring cases 63, and the rollers 61 are biased in the clockwise direction by springs 62. As a result, due to the incline of the cam surface 52, the rollers 61 are biased radially outwardly by the springs 62. One end of each spring is in contact with an adjacent roller 61, and the other end of each spring is housed in the concave components 64 provided for each spring case 63. A plurality of detent holes 65 and 66 are provided through the spring cases 63 of the roller case 60. Of the detent holes, detent holes 65 align with the detent holes 22 in the first fixed side case 20 and detent holes 43 in the second fixed side case 40.

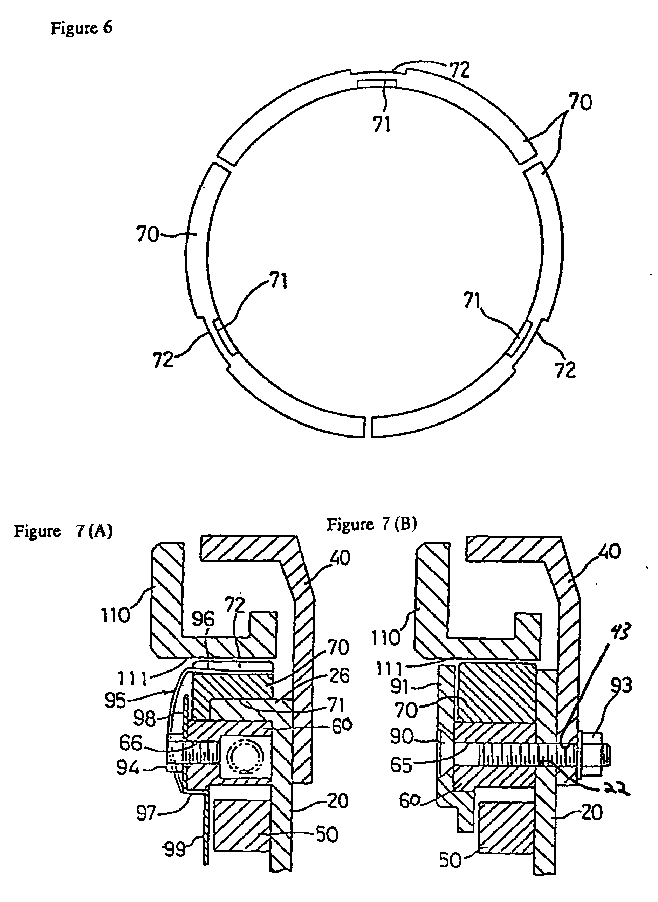

As indicated in Figure 7B, the roller case 60, the first fixed side case 20, and the second fixed side case 40 are fixed by attachment bolts 90 and nuts 93. Presser plates 91 are attached to the heads ofthe attachment bolts 90. Part of each presser plate 91 extends from the outer peripheral surface of the cam member 50 radially inward, thus effectively retaining the cam member 50 to first fixed side plate 20. Another part of each pressing plate 91 extends from the inner peripheral surface of the brake shoe 70 radially outward, thus effectively retaining the brake shoe 70 to first fixed side plate 20. The brake shoe 70 is disposed radially outwardly of the roller case 60.

As shown in Figure 6, the brake assembly is constructed of three similarly shaped brake shoes 70. Each of these brake shoes 70 has a first concave component 71 and second concave component 72, both formed in the central portion of each brake shoe 70 and mutually spaced apart by approximately 120 degrees. As indicated in Figure 7A, the first concave component 71 is a groove for engaging with the protrusions 26 of the first fixed side case 20. The engagement between the protrusions 26 and the first concave component 71 holds the brake shoes 70 in their respective peripheral locations. The second concave component 72 is a groove for engaging a plate spring 95. The plate springs 95 have an axially extending surface 96 and a surface 97 parallel to the surface 96. The surface 96 engages with the second concave component 72 of the brake shoes 70, and the surface 97 engages with the under-surface of the roller case 60 so that the brake shoes 70 are biased radially inwardly by the plate springs 95.

The plate springs 95 also have a holding component 98 with a detent hole for receiving a screw 94 therethrough. The screw 94 is threaded into the screw hole 66 provided in the roller case 60 so that the plate spring is fixed to the roller case 60. The plate springs 95 are further equipped with an extended surface 99 that extends perpendicular to the surface 97 and radially inwardly thereof.

The materials used for the brake shoes 70 may be aluminum alloy or rubber materials. The outer peripheral surface of each brake shoe 70 is about 60 mm from the axis of the hub axle 2. The increase in the diameter of the brake shoes 70 results in a potentially greater surface area in the plane of contact on which the braking action occurs. For a given area for the plane of contact, the enlarged diameter of the brake shoes 70 allows a thinner brake device B to be made. The axial thickness of the brake shoes 70 in this embodiment is 7.5 mm, which is thinner than the brake shoes of conventional roller brakes.

As shown in Figure 3, the rotating side case 100 is in the form of a disk-with a hole in the center through which the hub axle 1 passes. Four detent holes 102 are provided in the radially inward region of rotating side case 100, and these detent holes 102 align with threaded detent holes 10 provided in the hub drum 2. The rotating side case 100 is fixed to hub drum 2 by bolts 113 having a head 114 so that rotating side case 100 rotates integrally with the hub drum 2. A brake ring 110 is fixed in the outer peripheral region of the rotating side case 100 by attachment screws 103 passing through eight detent holes 101 located in die rotating side case 100. The brake ring 110 has a contact surface 111 that extends axially and comes into contact with the contact surface of the brake shoes 70 during braking. Four radially extending heat radiator plates 105 are axially integrated at the periphery of the rotating side case 100.

As a result of this structure, when a brake lever attached to the handle (not shown in figure) is operated, the operating arm 80 can be swung in the direction of the arrow in Figure 2, and the. cam member 50 can be swung so that rollers 61 are pressed radially outwardly. This, in turn, causes brake shoes 70 to contact surface 111 of brake ring 110. When the brake lever is released, the cam member 50 is returned via the second link arm 85 to the opposite side by the biasing springs 87 provided at the base 82 of the operating arm 80, thus releasing the braking force.

As shown in Figure 3, the heads 114 of bolts 113 are positioned between the hub axle 1 and cam member 50. Also, the heads 114 of bolts 113 are accommodated in the cam member space defined radially inwardly of cam member 50. In this embodiment, a portion of hub drum 2 also is accommodated within the cam member space defined radially inwardly of cam member 50. The cam member 50 is not positioned in tandem with the hub drum 2 as in prior art hub brake designs, thus resulting in a more axially compact design.

While the above is a description of one embodiment of the present invention, further modifications may be employed without departing from the scope ofthe present invention. For example, the size, shape, location or orientation of the various components may be changed as desired. The functions of one element may be performed by two, and vice versa. In the described embodiment, the first fixed side case to was attached to the second fixed side case 40 through bolts 93, and both fixed side cases were fixed relative to the hub axle I through support arm 42 and attachment bands 46, but the fixed relationship may also be formed by providing a spline in the first lock seat 4; and by providing a groove in the first fixed side case 20 to engage the spline. A cylindrical roller 61 was used as a brake operating element in this embodiment, but a spherical ball may also be used instead.

Thus, the scope of the invention should not be limited by the specific structures disclosed. Instead, the true scope of the invention should be determined by the following claims.

## Claims

1. A bicycle brake comprising:
a fixed member (1) having a fixed member axis (X);
a hub drum (2) rotatably supported around the fixed member (1);
a fixed case (20) nonrotatably fixed relative to the fixed member (1);
a brake member (70);
a brake operating element (61) disposed radially inwardly of the brake member (70) for pushing the brake member (70) radially outwardly;
a cam member (50) disposed radially inwardly of the brake operating element (61), wherein the cam member (50) is shaped so that the brake operating element (61) moves radially outwardly in response to relative rotation between the cam member (50) and the brake operating element (61), and wherein the cam member (50) defines a cam member space radially inwardly of the cam member (50) and having an axial width equal to the axial width of the cam member (50);
a rotating case (100, 110) having a contact surface (111) disposed radially outwardly of the brake member (70) for contacting the brake member (70) when the brake member (70) moves radially outwardly, wherein the rotating case (100, 110) is coupled to the hub drum (2) for rotating integrally therewith; and
wherein a portion of the hub drum (2) is disposed within the cam member space;
wherein the cam member (50) is rotatably coupled to the fixed member (1), and further comprising a cam operating member (80, 85, 55) for rotating the cam member (50), wherein the cam operating member (80, 85, 55) includes a first link arm (80) coupled for rotation around a rotational axis (Y) radially offset from the fixed member axis (X);
wherein:
the rotational axis (Y) passes through the cam member space;
there is a plurality of the brake members (70) encircling the fixed member (1), wherein the cam member (50) encircles the fixed member (1), wherein there is a plurality of the brake operating elements (61) circumferentially disposed along an outer peripheral surface (51) of the cam member (50),
wherein the outer peripheral surface (51) of the cam member (50) includes a plurality of cam surfaces (52), and wherein each cam surface (52) is disposed in close proximity to one of the plurality of brake operating elements (61) so that the plurality of cam surfaces (52) press the plurality of brake operating elements (61) outwardly when the cam member (50) and the plurality of brake operating elements (61) rotate relative to each other; and,
wherein the brake further includes a plurality of brake operating element biasing elements (62), wherein each brake operating element biasing element (62) contacts a corresponding brake operating element (61) for biasing the corresponding brake operating element (61) toward its associated cam surface (52) of the cam member (50) so that the plurality of brake operating elements (61) are biased radially outwardly.

2. A bicycle brake according to claim 1, wherein the brake includes
an attachment mechanism (113) for coupling the rotating case (100, 110) to the hub drum (2) so that the rotating case (100, 110) rotates integrally with the hub drum (2); and
wherein a portion of the attachment mechanism (113) is disposed within the cam member space.

3. A bicycle brake according to claim 2, wherein the attachment mechanism comprises a threaded attachment member (113).

4. A bicycle brake according to claim 3, wherein the cam operating member (80, 85, 55) further comprises a second link arm (85) extending from the first link arm (80) and inclined relative to the first link arm (80) for engaging a detent (55) on the cam member (50).

5. A bicycle brake according to any preceding claim, wherein the cam member (50) includes a cam surface (52) for pushing the brake operating element (61) radially outwardly when the cam member (50) and the brake operating element (61) rotate relative to each other, and further comprising:
a brake operating element case (60) fixed relative to the fixed case (1); and
a brake operating element biasing element (62) for biasing the brake operating element (61) toward the cam surface (52) of the cam member (50) so that the brake operating element (61) is biased radially outwardly.

6. A bicycle brake according to any preceding claims, the brake including a brake member biasing element (95) which biases the or each brake member (70) radially inwardly.

7. A bicycle brake according to Claim 6 when dependent on claim 5, wherein the brake member biasing element (95) is mounted to the brake operating element case (60).

8. A bicycle brake according to any preceding claim, wherein the brake operating element comprises a roller (61).

9. A bicycle brake according to any preceding claim, wherein the fixed member comprises a hub axle (1).

10. A bicycle brake apparatus according to any preceding claim, wherein the cam member (50) has a cam member inner peripheral surface.

11. A bicycle brake according to claim 10, wherein the rotating case (100, 110) includes
a contact surface (111) disposed radially outwardly of the brake member (70) for contacting the brake member (70) when the brake member (70) moves radially outwardly.

12. A bicycle brake according to claim 10 or claim 11, wherein the rotating case (100, 110) includes
a rotating case inner peripheral surface defining a central opening aligned radially inwardly from the cam member inner peripheral surface; and
an attachment opening (102) disposed radially outwardly from the central opening for receiving a fastener (113) therethrough for attaching the rotating case (100, 110) to the bicycle hub (2).

13. A bicycle brake according to claim 12, wherein the attachment opening (102) is aligned radially inwardly of the cam member inner peripheral surface.

14. A bicycle brake according to any one of claims 10 to 13, wherein the cam member inner peripheral surface has an inner peripheral diameter of at least 70 millimetres.

15. A bicycle brake according to claim 14, wherein the inner peripheral diameter is approximately 83 millimetres.

16. A bicycle brake apparatus according to any preceding claim, wherein the or each brake member (70) has an outer peripheral surface that defines an arc with a radius of curvature relative to the axis (X), wherein the radius of curvature is approximately 60 millimetres.

17. A bicycle brake apparatus according to claim 16, wherein the outer peripheral surface has an axial thickness of approximately 7.5 millimetres.

## Patentansprüche

1. Fahrradbremse aufweisend:
ein ortsfestes Element (1), das eine Achse (X) des ortsfesten Elements aufweist;
eine Nabentrommel (2), die um das ortsfeste Element (1) drehbar gelagert ist;
ein ortsfestes Gehäuse (20), das relativ zum ortsfesten Element (1) nicht-drehbar befestigt ist;
ein Bremselement (70);
ein Bremsbetätigungselement (61), das radial innerhalb vom Bremselement (70) angeordnet ist, um das Bremselement (70) in Richtung radial nach außen zu drücken;
ein Nockenelement (50), das radial innerhalb vom Bremsbetätigungselement (61) angeordnet ist, wobei das Nockenelement (50) so geformt ist, dass sich das Bremsbetätigungselement (61) als Reaktion auf eine Relativdrehung zwischen dem Nockenelement (50) und dem Bremsbetätigungselement (61) radial nach außen bewegt, und wobei das Nockenelement (50) einen Nockenelement-Freiraum radial innerhalb vom Nockenelement (50) definiert und dieser eine axiale Breite aufweist, die gleich groß wie die axiale Breite des Nockenelementes (50) ist;
ein rotierendes Gehäuse (100, 110) mit einer Kontaktfläche (111), die radial außerhalb vom Bremselement (70) angeordnet ist, um mit dem Bremselement (70) in Kontakt zu kommen, wenn sich das Bremselement (70) radial nach außen bewegt, wobei das rotierende Gehäuse (100, 110) an die Nabentrommel (2) gekoppelt ist, um sich integral mit dieser zu drehen; und
wobei ein Abschnitt der Nabentrommel (2) innerhalb des Nockenelement-Freiraums angeordnet ist;
wobei das Nockenelement (50) mit dem ortsfesten Element (1) drehbar verbunden ist, und weiter ein Nockenbetätigungselement (80, 85, 55) zum Rotieren des Nockenelements (50) aufweist, wobei das Nockenbetätigungselement (80, 85, 55) einen ersten Verbindungsarm (80) beinhaltet, der für eine Rotation um eine Rotationsachse (Y) gekoppelt ist, die radial versetzt von der Achse (X) des ortsfesten Elements angeordnet ist;
wobei:
die Drehachse (Y) durch den Nockenelement-Freiraum hindurch verläuft;
es eine Mehrzahl von den Bremselementen (70) gibt, die das ortsfeste Element (1) umgeben, wobei das Nockenelement (50) das ortsfeste Element (1) umgibt, und wobei es eine Mehrzahl von Bremsbetätigungselementen (61) gibt, die in Umfangsrichtung entlang einer Außenumfangsfläche (51) des Nockenelements (50) angeordnet sind, wobei die Außenumfangsfläche (51) des Nockenelementes (50) eine Mehrzahl von Nockenflächen (52) beinhaltet, und wobei jede Nockenfläche (52) ganz nahe bei einem der Mehrzahl von Bremsbetätigungselementen (61) angeordnet ist, so dass die Mehrzahl von Nockenflächen (52) die Mehrzahl von Bremsbetätigungselementen (61) nach außen drückt, wenn das Nockenelement (50) und die Mehrzahl von Bremsbetätigungselementen (61) relativ zueinander rotieren; und
die Bremse weiter eine Mehrzahl von Bremsbetätigungselement-Vorspannelementen (62) beinhaltet, wobei jedes Bremsbetätigungselement-Vorspannelement (62) mit einem entsprechenden Bremsbetätigungselement (61) in Kontakt ist, um das entsprechende Bremsbetätigungselement (61) zu dessen zugehöriger Nockenfläche (52) des Nockenelements (50) vorzuspannen, so dass die Mehrzahl von Bremsbetätigungselementen (61) radial nach außen vorgespannt sind.

2. Fahrradbremse gemäß Anspruch 1, wobei die Bremse beinhaltet:
einen Befestigungsmechanismus (113) zum Koppeln des rotierenden Gehäuses (100, 110) an die Nabentrommel 2), so dass sich das rotierende Gehäuse (100, 110) integral mit der Nabentrommel (2) dreht; und
wobei ein Abschnitt des Befestigungsmechanismus (113) innerhalb des Nockenelement-Freiraums angeordnet ist.

3. Fahrradbremse gemäß Anspruch 2, wobei der Befestigungsmechanismus ein mit einem Gewinde versehenes Befestigungselement (113) beinhaltet.

4. Fahrradbremse gemäß Anspruch 3, wobei das Nockenbetätigungselement (80, 85, 55) weiter einen zweiten Verbindungsarm (85) beinhaltet, der sich von dem ersten Verbindungsarm (80) erstreckt und relativ zum ersten Verbindungsarm (80) geneigt ist, um in eine Rastvorrichtung (55) am Nockenelement (50) einzugreifen.

5. Fahrradbremse gemäß einem der vorhergehenden Ansprüche, wobei das Nockenelement (50) eine Nockenfläche (52) aufweist, um das Bremsbetätigungselement (61) radial nach außen zu drücken, wenn das Nockenelement (50) und das Bremsbetätigungselement (61) sich relativ zueinander drehen, und die weiter beinhaltet:
ein Bremsbetätigungselementgehäuse (60), das relativ zum ortsfesten Gehäuse (1) feststehend ist; und
ein Bremsbetätigungselement-Vorspannelement (62) zum Vorspannen des Bremsbetätigungselements (61) in Richtung zur Nockenfläche (52) des Nockenelements (50), so dass das Bremsbetätigungselement (51) radial nach außen vorgespannt ist,

6. Fahrradbremse gemäß einem der vorhergehenden Ansprüche, wobei die Bremse ein Bremselement-Vorspannelement (95) beinhaltet, das den oder jedes Bremselement (70) radial nach innen vorspannt.

7. Fahrradbremse gemäß Anspruch 6 wenn abhängig von Anspruch 5, wobei das Bremselement-Vorspannelement (95) an dem Bremsbetätigungselementgehäuse (60) montiert ist.

8. Fahrradbremse gemäß einem der vorhergehenden Ansprüche, wobei das Bremsbetätigungselement eine Rolle (61) beinhaltet.

9. Fahrradbremse gemäß einem der vorhergehenden Ansprüche, wobei das ortsfeste Element eine Nabenachse (1) beinhaltet.

10. Fahrradbremsvorrichtung gemäß einem der vorhergehenden Ansprüche, wobei das Nockenelement (50) eine Nockenelement-Innenumfangsfläche aufweist.

11. Fahrradbremse gemäß Anspruch 10, wobei das rotierende Gehäuse (100, 110) beinhaltet:
eine Kontaktfläche (111), die radial außerhalb vom Bremselement (70) angeordnet ist, um mit dem Bremselement (70) in Kontakt zu kommen, wenn sich das Bremselement (70) radial nach außen bewegt.

12. Fahrradbremse gemäß Anspruch 10 oder Anspruch 11, wobei das rotierende Gehäuse (100, 110) beinhaltet:
eine Innenumfangsfläche des rotierenden Gehäuses, die eine zentrale Öffnung definiert, die radial innerhalb von der Nockenelement-Innenumfangsfläche fluchtend ausgerichtet ist; und
eine Befestigungsöffnung (102), die radial außerhalb von der zentralen Öffnung angeordnet ist, um ein Befestigungselement (113) zum Befestigen des rotierenden Gehäuses (100, 110) an der Fahrradnabe (2) aufzunehmen.

13. Fahrradbremse gemäß Anspruch 12, wobei die Befestigungsöffnung (102) radial innerhalb von der Nockenelement-Innenumfangsfläche fluchtend ausgerichtet ist.

14. Fahrradbremse gemäß einem der Ansprüche 10 bis 13, wobei die Nockenelement-Innenumfangsfläche einen Innenumfangsdurchmesser von mindestens 70 mm aufweist.

15. Fahrradbremse gemäß Anspruch 14, wobei der Innenumfangsdurchmesser ungefähr 83 mm beträgt.

16. Fahrradbremsvorrichtung gemäß einem der vorhergehenden Ansprüche, wobei der oder jedes Bremselement (70) eine Außenumfangsfläche aufweist, die einen Bogen mit einem Krümmungsradius relativ zur Achse (X) definiert, wobei der Krümmungsradius ungefähr 60 mm beträgt.

17. Fahrradbremsvorrichtung gemäß Anspruch 16, wobei die Außenumfangsfläche eine axiale Dicke von ungefähr 7,5 mm aufweist.

## Revendications

1. Frein de bicyclette comprenant :
un élément fixe (1) ayant un axe d'élément fixe (X) ;
un tambour de moyeu (2) supporté de manière rotative autour de l'élément fixe (1) ;
un boîtier fixe (20) fixé de manière non rotative par rapport à l'élément fixe (1) ;
un élément formant frein (70) ;
un élément de commande de frein (61) disposé radialement vers l'intérieur de l'élément formant frein (70) pour pousser l'élément formant frein (70) radialement vers l'extérieur ;
un élément formant came (50) disposé radialement vers l'intérieur de l'élément de commande de frein (61), dans lequel l'élément formant came (50) est formé de sorte que l'élément de commande de frein (61) se déplace radialement vers l'extérieur en réponse à la rotation relative entre l'élément formant came (50) et l'élément de commande de frein (61), et dans lequel l'élément formant came (50) définit un espace d'élément formant came radialement vers l'intérieur de l'élément formant came (50) et ayant une largeur axiale égale à la largeur axiale de l'élément formant came (50) ;
un boîtier rotatif (100, 110) ayant une surface de contact (111) disposée radialement vers l'extérieur de l'élément formant frein (70) pour entrer en contact avec l'élément formant frein (70) lorsque l'élément formant frein (70) se déplace radialement vers l'extérieur, dans lequel le boîtier rotatif (100, 110) est couplé au tambour de moyeu (2) pour tourner de manière solidaire avec celui-ci ; et
dans lequel une partie du tambour de moyeu (2) est disposée à l'intérieur de l'espace d'élément formant came ;
dans lequel l'élément formant came (50) est couplé de manière rotative à l'élément fixe (1), et comprenant en outre un élément de commande de came (80, 85, 55) pour faire tourner l'élément formant came (50), dans lequel l'élément de commande de came (80, 85, 55) comprend un premier bras de liaison (80) couplé pour la rotation autour d'un axe de rotation (Y) radialement décalé de l'axe d'élément fixe (X) ;
dans lequel :
l'axe de rotation (Y) passe à travers l'espace d'élément formant came ;
on trouve une pluralité d'éléments formant frein (70) encerclant l'élément fixe (1), dans lequel l'élément formant came (50) encercle l'élément fixe (1), dans lequel on trouve une pluralité d'éléments de commande de frein (61) disposés de manière circonférentielle le long d'une surface périphérique externe (51) de l'élément formant came (50), dans lequel la surface périphérique externe (51) de l'élément formant came (50) comprend une pluralité de surfaces de came (52), et dans lequel chaque surface de came (52) est disposée à proximité immédiate de l'un de la pluralité des éléments de commande de frein (61) de sorte que la pluralité des surfaces de came (52) appuie sur la pluralité des éléments de commande de frein (61) vers l'extérieur lorsque l'élément formant came (50) et la pluralité des éléments de commande de frein (61) tournent les uns par rapport aux autres ; et
dans lequel le frein comprend en outre une pluralité d'éléments de sollicitation d'élément de commande de frein (62), dans lequel chaque élément de sollicitation d'élément de commande de frein (62) est en contact avec un élément de commande de frein (61) correspondant pour solliciter l'élément de commande de frein (61) correspondant vers sa surface de came associée (52) de l'élément formant came (50) de sorte que la pluralité d'éléments de commande de frein (61) est sollicitée radialement vers l'extérieur.

2. Frein de bicyclette selon la revendication 1, dans lequel le frein comprend :
un mécanisme de fixation (113) pour coupler le boîtier rotatif (100, 110) au tambour de moyeu (2) de sorte que le boîtier rotatif (100, 110) tourne de manière solidaire avec le tambour de moyeu (2) ; et
dans lequel une partie du mécanisme de fixation (113) est disposée à l'intérieur de l'espace d'élément formant came.

3. Frein de bicyclette selon la revendication 2, dans lequel le mécanisme de fixation comprend un élément de fixation fileté (113).

4. Frein de bicyclette selon la revendication 3, dans lequel l'élément de commande de came (80, 85, 55) comprend en outre un second bras de liaison (85) s'étendant à partir du premier bras de liaison (80) et incliné par rapport au premier bras de liaison (80) pour mettre en prise un cliquet (55) sur l'élément formant came (50).

5. Frein de bicyclette selon l'une quelconque des revendications précédentes, dans lequel l'élément formant came (50) comprend une surface de came (52) pour pousser l'élément de commande de frein (61) radialement vers l'extérieur lorsque l'élément formant came (50) et l'élément de commande de frein (61) tournent l'un par rapport à l'autre, et comprenant en outre :
un boîtier d'élément de commande de frein (60) fixé par rapport au boîtier fixe (1) ; et
un élément de sollicitation d'élément de commande de frein (62) pour solliciter l'élément de commande de frein (61) vers la surface de came (52) de l'élément formant came (50) de sorte que l'élément de commande de frein (61) est sollicité radialement vers l'extérieur.

6. Frein de bicyclette selon l'une quelconque des revendications précédentes, le frein comprenant un élément de sollicitation d'élément formant frein (95) qui sollicite le ou chaque élément formant frein (70) radialement vers l'intérieur.

7. Frein de bicyclette selon la revendication 6, lorsqu'elle dépend de la revendication 5, dans lequel l'élément de sollicitation d'élément formant frein (95) est monté sur le boîtier d'élément de commande de frein (60).

8. Frein de bicyclette selon l'une quelconque des revendications précédentes, dans lequel l'élément de commande de frein comprend un rouleau (61).

9. Frein de bicyclette selon l'une quelconque des revendications précédentes, dans lequel l'élément fixe comprend un axe de moyeu (1).

10. Appareil formant frein de bicyclette selon l'une quelconque des revendications précédentes, dans lequel l'élément formant came (50) a une surface périphérique interne d'élément formant came.

11. Frein de bicyclette selon la revendication 10, dans lequel le boîtier rotatif (100, 110) comprend :
une surface de contact (111) disposée radialement vers l'extérieur de l'élément formant frein (70) pour entrer en contact avec l'élément formant frein (70) lorsque l'élément formant frein (70) se déplace radialement vers l'extérieur.

12. Frein de bicyclette selon la revendication 10 ou la revendication 11, dans lequel le boîtier rotatif (100, 110) comprend :
une surface périphérique interne de boîtier rotatif définissant une ouverture centrale alignée radialement vers l'intérieur à partir de la surface périphérique interne d'élément formant came ; et
une ouverture de fixation (102) disposée radialement vers l'extérieur à partir de l'ouverture centrale pour recevoir une fixation (113) à travers celle-ci afin de fixer le boîtier rotatif (100, 110) au moyeu (2) de bicyclette.

13. Frein de bicyclette selon la revendication 12, dans lequel l'ouverture de fixation (102) est alignée radialement vers l'intérieur de la surface périphérique interne d'élément formant came.

14. Frein de bicyclette selon l'une quelconque des revendications 10 à 13, dans lequel la surface périphérique Interne d'élément formant came a un diamètre périphérique interne d'au moins 70 millimètres.

15. Frein de bicyclette selon la revendication 14, dans lequel le diamètre périphérique interne mesure approximativement 83 millimètres.

16. Appareil formant frein de bicyclette selon l'une quelconque des revendications précédentes, dans lequel le ou chaque élément formant frein (70) a une surface périphérique externe qui définit un arc avec un rayon de courbure par rapport à l'axe (X), dans lequel le rayon de courbure mesure approximativement 60 millimètres.

17. Appareil formant frein de bicyclette selon la revendication 16, dans lequel la surface périphérique externe a une épaisseur axiale d'approximativement 7,5 millimètres.
